# EUROPEAN PATENT APPLICATION

(11) **EP 4 838 563 A1**
(43) Date of publication of application: **11.11.2026**
(21) Application number: 25861085.6
(22) Date of filing: 18.08.2025
(51) Int. Cl.: H01M 4/04, H01M 4/139, H01M 10/04, B05C 5/02, B05C 9/12, H01M 4/02

(54) **SECONDARY BATTERY MANUFACTURING EQUIPMENT AND METHOD FOR MANUFACTURING SECONDARY BATTERY BY USING SAME**

(30) Priority: 28.08.2024 KR 20240116174
(71) Applicant: LG Energy Solution, Ltd., Seoul 07335 (KR)
(72) Inventor: YOON, Jong Su, Daejeon 34122 (KR); KIM, Sang Min, Daejeon 34122 (KR); MOON, Young Gyu, Daejeon 34122 (KR); KIM, Young Geun, Daejeon 34122 (KR); EOM, Yun Jeong, Daejeon 34122 (KR)
(74) Representative: Plasseraud IP
(86) International application number: PCT/KR2025/012451
(87) International publication number: WO 2026/049387

(57) **Abstract**

According to exemplary embodiments, secondary battery manufacturing apparatus is provided. The apparatus includes a die coater configured to apply an electrode slurry on a current collector sheet such that an electrode slurry lane is formed on the current collector sheet; and a magnetic module configured to apply a magnetic field to an electrode sheet including the current collector sheet and the electrode slurry lane, and the magnetic field has non-uniform intensity in a transverse direction of the electrode sheet.

## Description

### [Technical Field]

The present disclosure relates to secondary battery manufacturing apparatus and a method for manufacturing a secondary battery using the same. This application claims the benefit of priority from Korean Patent Application No. 10-2024-0116174, filed on August 28, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

Secondary batteries are manufactured through an electrode process, an assembly process, and an activation process. Among them, the electrode process is the most critical process in determining the yield and performance of a battery cell. The electrode process may include a coating process, a roll press process, and a slitting process. In the coating process, an active material and an insulating material may be coated on the surface of a current collector. In the roll press process, an electrode may be pressed by pressing rolls. The roll press process may increase the density, performance, and surface quality of the electrode. In the slitting process, the electrode may be cut into a plurality of electrodes according to the design of the battery cell. The slitting process is an optional process and may be omitted.

### [Summary]

### [Technical Problem]

The technical problem to be solved by the technical idea of the present disclosure is to provide secondary battery manufacturing apparatus having improved reliability, and a method for manufacturing a secondary battery using the same.

### [Technical Solution]

According to exemplary embodiments of the present disclosure to solve the above-described problem, secondary battery manufacturing apparatus is provided. The apparatus includes a die coater configured to apply an electrode slurry on a current collector sheet such that an electrode slurry lane is formed on the current collector sheet; and a magnetic module configured to apply a magnetic field to an electrode sheet including the current collector sheet and the electrode slurry lane, wherein the magnetic field has non-uniform intensity in a transverse direction of the electrode sheet.

The magnetic module includes a magnetic device configured to generate the magnetic field and a magnetic shield configured to partially absorb the magnetic field generated by the magnetic device.

The magnetic shield includes any one of iron, nickel, and alloys thereof.

The magnetic shield includes holes overlapping edge portions of the electrode slurry lane.

The magnetic shield includes a plurality of holes arranged in the transverse direction.

The number of the plurality of holes is three or more.

According to exemplary embodiments, secondary battery manufacturing apparatus is provided. The apparatus includes a die coater configured to apply an electrode slurry on a current collector sheet such that an electrode slurry lane is formed on the current collector sheet; and a magnetic module configured to apply a magnetic field to an electrode sheet including the current collector sheet and the electrode slurry lane, wherein the magnetic module includes a magnetic device configured to generate the magnetic field and a magnetic shield configured to partially absorb the magnetic field generated by the magnetic device.

The magnetic field has non-uniform intensity in a transverse direction of the electrode sheet.

The magnetic shield includes any one of iron, nickel, and alloys thereof.

The magnetic shield includes holes overlapping edge portions of the electrode slurry lane.

The magnetic shield includes a plurality of holes arranged in a transverse direction of the electrode sheet.

The number of the plurality of holes is three or more.

### [Advantageous Effects]

Secondary battery manufacturing apparatus according to exemplary embodiments of the present disclosure includes a magnetic module capable of controlling an intensity distribution of a magnetic field for aligning an active material of an electrode slurry. The alignment of the active material may control a resistance distribution of an electrode sheet, and accordingly, a battery cell having improved lithium deposition characteristics and swelling characteristics may be provided.

The technical effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 illustrates secondary battery manufacturing apparatus according to exemplary embodiments.
FIG. 2 illustrates a magnetic shield of secondary battery manufacturing apparatus according to exemplary embodiments.
FIG. 3 is a flowchart to describe a method of manufacturing a secondary battery according to exemplary embodiments.
FIG. 4 illustrates a magnetic shield of secondary battery manufacturing apparatus according to exemplary embodiments.
FIG. 5 illustrates a magnetic shield of secondary battery manufacturing apparatus according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First Embodiment)

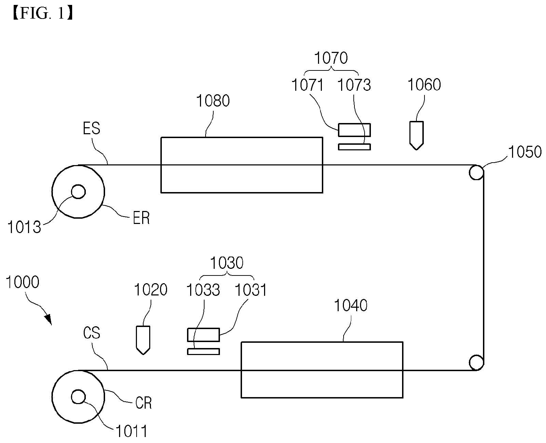

FIG. 1 illustrates secondary battery manufacturing apparatus 1000 according to exemplary embodiments.

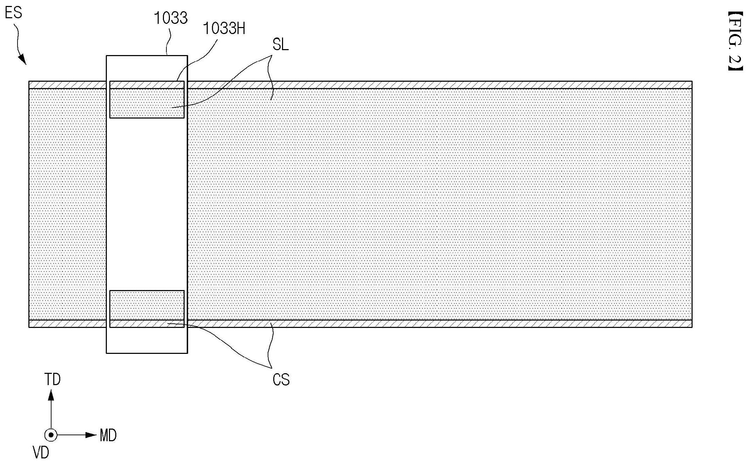

FIG. 2 illustrates processing of an electrode sheet of secondary battery manufacturing apparatus 1000 according to exemplary embodiments.

Referring to FIG. 1 and FIG. 2, the secondary battery manufacturing apparatus 1000 may include an unwinder 1011, a rewinder 1013, a die coater 1020, a magnetic module 1030, a drying device 1040, guide rolls 1050, a die coater 1060, a magnetic module 1070, and a drying device 1080.

A current collector roll CR may be loaded on the unwinder 1011. The unwinder 1011 may be configured to unwind a current collector sheet CS from the current collector roll CR. As the current collector sheet CS is processed by the die coater 1020, the magnetic module 1030, the drying device 1040, the die coater 1060, the magnetic module 1070, and the drying device 1080, an electrode sheet ES may be provided. The rewinder 1013 may be configured to wind the electrode sheet ES into an electrode roll ER. The electrode sheet ES may be wound into the electrode roll ER. After a predetermined winding amount target is reached, the electrode roll ER may be cut and separated from the electrode sheet ES. Accordingly, the current collector sheet CS and the electrode sheet ES may move between the unwinder 1011 and the rewinder 1013, and processing by the secondary battery manufacturing apparatus 1000 may be referred to as roll-to-roll processing.

The moving direction of the current collector sheet CS and the electrode sheet ES is referred to as a traveling direction (Machine Direction) MD. The traveling direction MD may also be referred to as a longitudinal direction of the current collector sheet CS and the electrode sheet ES. A direction perpendicular to the traveling direction MD is defined as a transverse direction TD of the current collector sheet CS and the electrode sheet ES. The transverse direction TD may also be referred to as a width direction of the current collector sheet CS and the electrode sheet ES. A vertical direction VD may be substantially perpendicular to each of the traveling direction MD and the transverse direction TD.

The thickness of the current collector sheet CS may range from about 3 µm to about 500 µm. The current collector sheet CS may not cause chemical changes in a finally manufactured secondary battery and may have high conductivity. The surface of the current collector sheet CS may include a fine uneven structure for increasing adhesion of an active material. The shape of the current collector sheet CS may include any one of a film, a sheet, a foil, a net, a porous body, a foam, and a nonwoven fabric.

According to exemplary embodiments, the current collector sheet CS may be used for manufacturing a positive electrode, and the current collector sheet CS may include any one of stainless steel, aluminum, nickel, titanium, calcined carbon, and aluminum-cadmium alloy, but is not limited thereto.

For example, the current collector sheet CS may be used for manufacturing a negative electrode, and the current collector sheet CS may include any one of copper, stainless steel, aluminum, nickel, titanium, calcined carbon, and aluminum-cadmium alloy.

The die coater 1020 may be configured to apply an electrode slurry to the current collector sheet CS to form an electrode slurry lane SL. A portion of the electrode sheet ES covered by the electrode slurry lane SL may be referred to as a coated portion. The coated portion may extend in the traveling direction MD.

The electrode slurry lane SL may include an electrode active material, a conductive material, a binder, and a solvent. By dissolving the electrode active material, the conductive material, the binder, and the like in a solvent, an electrode slurry may be manufactured. The solvent may disperse the electrode active material and the like. The solvent may be an aqueous solvent or a non-aqueous solvent. The solvent may include any one of DMSO, isopropyl alcohol, NMP, acetone, water, and mixtures thereof. The usage amount of the solvent may be determined based on a target viscosity of the slurry. Parameters for determining the usage amount of the solvent include coating thickness of the slurry, manufacturing yield, and workability.

According to exemplary embodiments, the electrode active material may be a positive electrode active material, but is not limited thereto. The positive electrode active material is a material capable of causing an electrochemical reaction. The positive electrode active material may be a lithium transition metal oxide. The positive electrode active material may include an olivine-based lithium metal phosphate represented by a chemical formula Li₁₊ₓM_{1-y}M'_{y}PO_{4-z}X_{z} (where M is a transition metal, more specifically any one of Fe, Mn, Co, and Ni, M' is any one of Al, Mg, and Ti, X is any one of F, S, and N, -0.5≤x≤+0.5, 0≤y≤0.5, and 0≤z≤0.1), but is not limited thereto.

The positive electrode active material may include layered compounds such as lithium cobalt oxide (LiCoO₂) and lithium nickel oxide (LiNiO₂) substituted with one or more transition metals; lithium manganese oxide substituted with one or more transition metals; lithium nickel-based oxide represented by a chemical formula LiNi_{1-y}M_{y}O₂ (where M is any one of Co, Mn, Al, Cu, Fe, Mg, B, Cr, Zn, and Ga, and 0.01≤y≤0.7); lithium nickel cobalt manganese composite oxide represented by Li_{1+z}Ni_{b}Mn_{c}Co_{1-(b+c+d)}M_{d}O₍₂₋ₑ₎Aₑ (where - 0.5≤z≤0.5, 0.1≤b≤0.8, 0.1≤c≤0.8, 0≤d≤0.2, 0≤e≤0.2, b+c+d<1, M is any one of Al, Mg, Cr, Ti, Si, and Y, and A is any one of F, P, and Cl) such as Li_{1+z}Ni_{1/3}Co_{1/3}Mn_{1/3}O₂ and Li_{1+z}Ni_{0.4}Mn_{0.4}Co_{0.2}O₂.

In addition, the electrode active material may be a negative electrode active material. The negative electrode active material may include, for example, carbon such as non-graphitizable carbon and graphite-based carbon. The negative electrode active material may include metal composite oxides such as LiₓFe₂O₃ (0≤x≤1), LixWO₂ (0≤x≤1), SnₓMe₁₋ₓMe'_{y}O_{z} (where Me is any one of Mn, Fe, Pb, and Ge, Me' is any one of Al, B, P, Si, Group 1, Group 2, Group 3 elements of the periodic table, and halogens; 0<x≤1; 1≤y≤3; and 1≤z≤8). The negative electrode active material may include any one of, for example, lithium metal; lithium alloy; silicon-based alloy; and tin-based alloy. The negative electrode active material may include metal oxides such as, for example, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may include, for example, conductive polymers such as polyacetylene and Li-Co-Ni-based materials.

The conductive material may have conductivity without causing chemical changes in a finally manufactured secondary battery. The conductive material may include, for example, graphite such as natural graphite or artificial graphite; carbon black such as acetylene black, Ketjen black, channel black, furnace black, lamp black, and thermal black; conductive fibers such as carbon fibers or metal fibers; metal powders such as carbon fluoride, aluminum, and nickel powder; conductive whiskers such as zinc oxide and potassium titanate; conductive metal oxides such as titanium oxide; and polyphenylene derivatives.

The binder may improve coupling between the active material and the conductive material and bonding force to the current collector sheet CS. The binder may include polyvinylidene fluoride (PVDF), polyvinyl alcohol, CMC, starch, hydroxypropyl cellulose, regenerated cellulose, polyvinyl pyrrolidone, tetrafluoroethylene, polyethylene, polypropylene, EPDM, sulfonated EPDM, styrene butadiene rubber, fluororubber, and various copolymers.

The solvent may be an aqueous solvent or a non-aqueous solvent. The solvent may include any one of dimethyl sulfoxide (DMSO), isopropyl alcohol, N-Methyl-2-pyrrolidone (NMP), acetone, water, and mixtures thereof.

The magnetic module 1030 may be disposed downstream of the die coater 1020. The magnetic module 1030 may be configured to process a portion of the electrode sheet ES processed by the die coater 1020. The die coater 1020 may be interposed between the magnetic module 1030 and the unwinder 1011.

The magnetic module 1030 may include a magnetic device 1031 and a magnetic shield 1033. The magnetic module 1030 may be configured to apply a magnetic field to the electrode sheet ES. According to exemplary embodiments, the magnetic field applied to the electrode sheet ES by the magnetic module 1030 may have non-uniform intensity in the transverse direction TD. The intensity of the magnetic field applied to the electrode sheet ES by the magnetic module 1030 may vary along the transverse direction.

The magnetic device 1031 may be configured to generate a magnetic field. The magnetic device 1031 may include an electromagnet and/or a permanent magnet. When the magnetic device 1031 includes an electromagnet, the magnetic device 1031 may include a core and a coil. The magnetic field generated by the magnetic device 1031 may be substantially parallel to the vertical direction VD, but is not limited thereto. The magnetic field may include a component oblique to the vertical direction VD. The magnetic device 1031 may be configured to align an active material of the electrode slurry lane SL.

The magnetic shield 1033 may be configured to absorb at least a portion of the magnetic field generated by the magnetic device 1031. The magnetic shield 1033 may include holes 1033H. The holes 1033H of the magnetic shield 1033 may expose a surface of the electrode sheet ES. According to exemplary embodiments, the holes 1033H may overlap edge portions of the electrode sheet ES in the vertical direction VD. According to exemplary embodiments, the holes 1033H may expose the edge portions of the electrode sheet ES. According to exemplary embodiments, the holes 1033H may overlap uncoated portions of the electrode sheet ES and edge portions of the electrode slurry lane SL in the vertical direction VD. According to exemplary embodiments, the holes 1033H may expose the uncoated portions of the electrode sheet ES and the edge portions of the electrode slurry lane SL. According to exemplary embodiments, each of the holes 1033H may not overlap a central portion in the transverse direction TD of the electrode sheet ES in the vertical direction VD. The central portion in the transverse direction TD of the electrode sheet ES may be covered by the magnetic shield 1033.

According to exemplary embodiments, the magnetic shield 1033 may include a material having high magnetic permeability. According to exemplary embodiments, the magnetic shield 1033 may include metal. The magnetic shield 1033 may include iron, nickel, and alloys thereof such as permalloy. The magnetic shield 1033 may be configured to block the magnetic field generated by the magnetic device 1031 or reduce the intensity of the magnetic field applied to the electrode sheet ES.

The intensity of the magnetic field applied to a portion of the electrode sheet ES overlapping the holes 1033H of the magnetic shield 1033 in the vertical direction VD may be different from an intensity of the magnetic field applied to a portion of the electrode sheet ES not overlapping the holes 1033H in the vertical direction VD (i.e., covered by the magnetic shield 1033). The intensity of the magnetic field applied to the portion of the electrode sheet ES overlapping the holes 1033H of the magnetic shield 1033 in the vertical direction VD may be greater than the intensity of the magnetic field applied to the portion of the electrode sheet ES not overlapping the holes 1033H in the vertical direction VD (i.e., covered by the magnetic shield 1033).

According to exemplary embodiments, the intensity of the magnetic field applied to the edge portions of the electrode slurry lane SL and the uncoated portions of the electrode sheet ES may be different from the intensity of the magnetic field applied to a central portion of the electrode slurry lane SL. According to exemplary embodiments, the intensity of the magnetic field applied to the edge portions of the electrode slurry lane SL and the uncoated portions of the electrode sheet ES may be greater than the intensity of the magnetic field applied to the central portion of the electrode slurry lane SL.

The uncoated portion of the electrode sheet ES is used for forming an electrode tab. When a battery cell is manufactured using the electrode sheet ES, electrons generated by an electrochemical reaction of the battery cell move through the electrode tab. Accordingly, an electrochemical reaction of a portion of the electrode close to the electrode tab may proceed faster than an electrochemical reaction of a portion of the electrode far from the electrode tab. According to exemplary embodiments, by increasing an alignment degree of the active material of the edge portions of the electrode slurry lane SL, resistance near the electrode tab may be reduced, and the electrochemical reaction within the electrode may be made uniform. Furthermore, lithium deposition due to high current density near the electrode tab may be eliminated or alleviated.

The secondary battery manufacturing apparatus 1000 may include an additional die coater for providing an insulating slurry on the electrode sheet ES. By providing the insulating slurry, insulating lanes covering the edge portions of the electrode slurry lane SL may be formed. The insulating slurry may include, for example, an insulating material, Styrene Butadiene Rubber (SBR), a binder, a stabilizer, and a solvent. The insulating material may include ceramic such as boehmite.

The drying device 1040 may be disposed downstream of the magnetic module 1030. The drying device 1040 may be configured to process a portion of the electrode sheet ES processed by the magnetic module 1030. The drying device 1040 may be interposed between the magnetic module 1030 and the rewinder 1013.

The drying device 1040 may be configured to dry the electrode sheet ES. The drying device 1040 may be, for example, an oven. The moisture content of the electrode sheet ES may be limited to a set numerical range by the drying device 1040. The drying device 1040 may operate based on, for example, dew point-based feedback, but is not limited thereto.

The first surface of the current collector sheet CS may be processed by the die coater 1020, the magnetic module 1030, and the drying device 1040. For processing a second surface of the current collector sheet CS, the current collector sheet CS may be guided by a guide roll 1150 such that the second surface of the current collector sheet CS faces upward in a space where the secondary battery manufacturing apparatus 1000 is installed.

The die coater 1060 may be configured to apply an electrode slurry to the current collector sheet CS to form an electrode slurry lane SL. Since the die coater 1060 is substantially the same as the die coater 1020, a redundant description of the die coater 1060 is omitted.

The magnetic module 1070 may be disposed downstream of the die coater 1020. The magnetic module 1070 may be configured to process a portion of the electrode sheet ES processed by the die coater 1020. The die coater 1020 may be interposed between the magnetic module 1070 and the unwinder 1011.

The magnetic module 1070 may include a magnetic device 1071 and a magnetic shield 1073. The magnetic module 1070 may be substantially the same as the magnetic module 1030. The magnetic device 1071 may be substantially the same as the magnetic device 1031. The magnetic shield 1073 may be substantially the same as the magnetic shield 1033. Accordingly, a redundant description of the magnetic module 1070, the magnetic device 1071, and the magnetic shield 1073 is omitted.

The drying device 1080 may be disposed downstream of the magnetic module 1070. The drying device 1080 may be configured to process a portion of the electrode sheet ES processed by the magnetic module 1070. The drying device 1080 may be interposed between the magnetic module 1070 and the rewinder 1013.

The drying device 1080 may be substantially the same as the drying device 1040. Accordingly, a redundant description of the drying device 1080 is omitted.

### (Second Embodiment: Method)

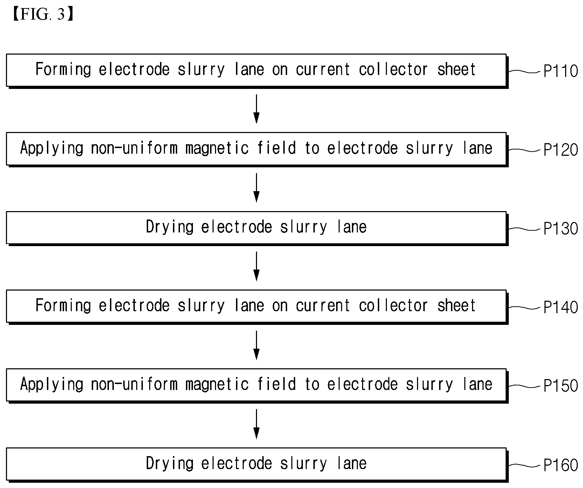

FIG. 3 is a flowchart to describe a method of manufacturing a secondary battery according to exemplary embodiments.

Referring to FIG. 1 to FIG. 3, in P110, an electrode slurry lane SL may be formed on a first surface of the current collector sheet CS. The electrode slurry lane SL may be formed by the die coater 1020.

Subsequently, in P120, a non-uniform magnetic field may be applied to the electrode slurry lane SL. The magnetic field may have non-uniform intensity in the transverse direction TD. The magnetic field may be applied by the magnetic module 1030. By applying the magnetic field, the electrode slurry lane SL may be magnetized. By magnetizing the electrode slurry lane SL, an orientation of a crystal surface of an active material (e.g., natural graphite) included in the electrode slurry SL may be aligned based on the current collector sheet CS.

Subsequently, in P130, the electrode slurry lane SL may be dried. The electrode slurry lane SL may be dried by the drying device 1040.

Subsequently, in P140, an electrode slurry lane SL may be formed on a second surface of the current collector sheet CS. The electrode slurry lane SL may be formed by the die coater 1060.

Subsequently, in P150, a non-uniform magnetic field may be applied to the electrode slurry lane SL. The magnetic field may have non-uniform intensity in the transverse direction TD. The magnetic field may be applied by the magnetic module 1070. By applying the magnetic field, the electrode slurry lane SL may be magnetized. By magnetizing the electrode slurry lane SL, an orientation of a crystal surface of an active material (e.g., natural graphite) included in the electrode slurry SL may be aligned based on the current collector sheet CS.

Subsequently, in P160, the electrode slurry lane SL may be dried. The electrode slurry lane SL may be dried by the drying device 1040.

Processes of P110 to P160 may be performed simultaneously, but may be performed on different portions of the electrode sheet ES. Accordingly, the same portion of the electrode sheet ES may undergo the processes of P110 to P160 in order.

After performing the coating process including P110 to P160, a roll press process, an additional drying process, a slitting process, and a notching process may be performed. The roll press process may be performed by roll press apparatus including pressing rolls. Due to the performance of the roll press process, a bonding force between a surface of an electrode plate and an active material may be strengthened. Accordingly, movement of lithium ions inside the electrode may be promoted, and output and performance of a finally manufactured secondary battery may be improved.

The drying process may include supplying dry air into a drying chamber, or supplying thermal energy to an electrode in the chamber through infrared rays and high-temperature air, and the like. The drying process may improve uniformity and reliability of the electrode by removing moisture from the electrode.

The slitting process is a process of separating the electrode into a plurality of electrodes having a smaller width in the transverse direction. Subsequently, the electrode may be cut into a shape including a tab by the notching process.

### (Third Embodiment: Apparatus)

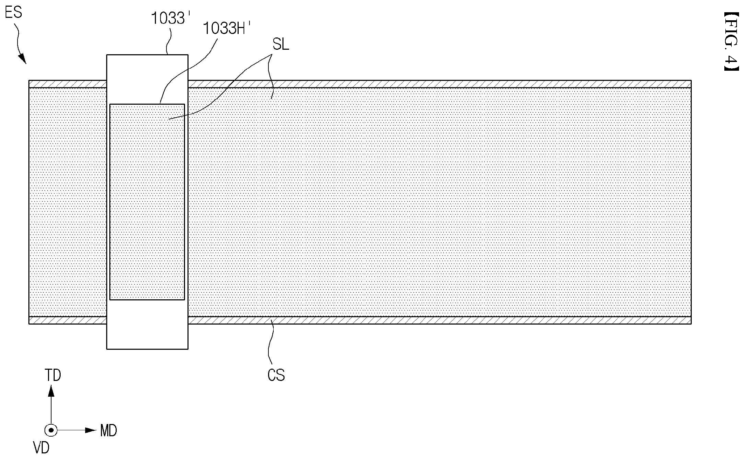

FIG. 4 illustrates a magnetic shield 1033' of secondary battery manufacturing apparatus according to exemplary embodiments.

Referring to FIG. 2 and FIG. 4, the magnetic shield 1033' is substantially the same as the magnetic shield 1033, except that it includes a hole 1033H' different from the holes 1033H. The hole 1033H' may overlap a central portion in the transverse direction TD of the electrode slurry lane SL in the vertical direction VD. The hole 1033H' may expose the central portion in the transverse direction TD of the electrode slurry lane SL. The hole 1033H' may not overlap edge portions in the transverse direction TD of the electrode slurry lane SL in the vertical direction VD. The magnetic shield 1033' may cover the edge portions in the transverse direction TD of the electrode slurry lane SL.

The intensity of the magnetic field applied to a portion of the electrode sheet ES overlapping the hole 1033H' of the magnetic shield 1033' in the vertical direction VD may be different from an intensity of the magnetic field applied to a portion of the electrode sheet ES not overlapping the hole 1033H' in the vertical direction VD (i.e., covered by the magnetic shield 1033'). The intensity of the magnetic field applied to the portion of the electrode sheet ES overlapping the hole 1033H' of the magnetic shield 1033' in the vertical direction VD may be greater than the intensity of the magnetic field applied to the portion of the electrode sheet ES not overlapping the hole 1033H' in the vertical direction VD (i.e., covered by the magnetic shield 1033').

According to exemplary embodiments, the intensity of the magnetic field applied to the central portion in the transverse direction TD of the electrode slurry lane SL may be different from an intensity of the magnetic field applied to the edge portions in the transverse direction TD of the electrode slurry lane SL and the uncoated portions of the electrode sheet ES. According to exemplary embodiments, the intensity of the magnetic field applied to the central portion in the transverse direction TD of the electrode slurry lane SL may be greater than the intensity of the magnetic field applied to the edge portions in the transverse direction TD of the electrode slurry lane SL and the uncoated portions of the electrode sheet ES.

According to exemplary embodiments, when the magnetic shield 1033' replaces the magnetic shield 1033, an alignment degree of the active material of the central portion of the electrode manufactured using the electrode sheet ES may be higher than an alignment degree of the active material of the edge portions. Accordingly, biasing of current density to the electrode tab may be alleviated, and the current density may be made uniform, whereby lithium deposition of a battery cell including the electrode may be alleviated.

### (Fourth Embodiment: Apparatus)

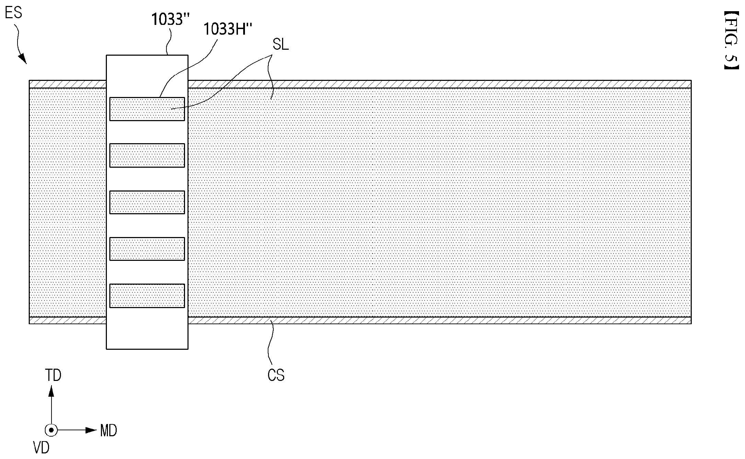

FIG. 5 illustrates a magnetic shield of secondary battery manufacturing apparatus according to exemplary embodiments.

Referring to FIG. 2 and FIG. 5, the magnetic shield 1033" is substantially the same as the magnetic shield 1033, except that it includes holes 1033H" different from the holes 1033H. The magnetic shield 1033" may include a plurality of holes 1033H" arranged in the transverse direction TD. The magnetic shield 1033" may include three or more holes 1033H".

The intensity of the magnetic field applied to a portion of the electrode sheet ES overlapping the holes 1033H" of the magnetic shield 1033" in the vertical direction VD may be different from an intensity of the magnetic field applied to a portion of the electrode sheet ES not overlapping the holes 1033H" in the vertical direction VD (i.e., covered by the magnetic shield 1033"). The intensity of the magnetic field applied to the portion of the electrode sheet ES overlapping the holes 1033H" of the magnetic shield 1033" in the vertical direction VD may be greater than the intensity of the magnetic field applied to the portion of the electrode sheet ES not overlapping the holes 1033H" in the vertical direction VD (i.e., covered by the magnetic shield 1033").

According to exemplary embodiments, by patterning a region of the electrode sheet ES to which a relatively strong magnetic field is applied, swelling of an electrode manufactured using the electrode sheet ES may be dispersed, and quality of contact between the electrode slurry lane SL and the current collector sheet CS may be improved. Accordingly, swelling of a battery cell manufactured using the electrode may be alleviated.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application

## Claims

1. Secondary battery manufacturing apparatus, comprising:
a die coater configured to apply an electrode slurry on a current collector sheet such that an electrode slurry lane is formed on the current collector sheet; and
a magnetic module configured to apply a magnetic field to an electrode sheet comprising the current collector sheet and the electrode slurry lane,
wherein the magnetic field has non-uniform intensity in a transverse direction of the electrode sheet.

2. The secondary battery manufacturing apparatus of claim 1, wherein the magnetic module comprises a magnetic device configured to generate the magnetic field and a magnetic shield configured to partially absorb the magnetic field generated by the magnetic device.

3. The secondary battery manufacturing apparatus of claim 2, wherein the magnetic shield comprises any one of iron, nickel, and alloys thereof.

4. The secondary battery manufacturing apparatus of claim 2, wherein the magnetic shield comprises holes overlapping edge portions of the electrode slurry lane.

5. The secondary battery manufacturing apparatus of claim 2, wherein the magnetic shield comprises a plurality of holes arranged in the transverse direction.

6. The secondary battery manufacturing apparatus of claim 5, wherein the number of the plurality of holes is three or more.

7. Secondary battery manufacturing apparatus, comprising:
a die coater configured to apply an electrode slurry on a current collector sheet such that an electrode slurry lane is formed on the current collector sheet; and
a magnetic module configured to apply a magnetic field to an electrode sheet comprising the current collector sheet and the electrode slurry lane,
wherein the magnetic module comprises a magnetic device configured to generate the magnetic field and a magnetic shield configured to partially absorb the magnetic field generated by the magnetic device.

8. The secondary battery manufacturing apparatus of claim 7, wherein the magnetic field has non-uniform intensity in a transverse direction of the electrode sheet.

9. The secondary battery manufacturing apparatus of claim 7, wherein the magnetic shield comprises any one of iron, nickel, and alloys thereof.

10. The secondary battery manufacturing apparatus of claim 7, wherein the magnetic shield comprises holes overlapping edge portions of the electrode slurry lane.

11. The secondary battery manufacturing apparatus of claim 7, wherein the magnetic shield comprises a plurality of holes arranged in a transverse direction of the electrode sheet.

12. The secondary battery manufacturing apparatus of claim 11, wherein the number of the plurality of holes is three or more
